# EUROPÄISCHE PATENTANMELDUNG

(11) **EP 0 826 571 A2**
(43) Veröffentlichungstag der Anmeldung: **04.03.1998**
(21) Anmeldenummer: 97890149.4
(22) Anmeldetag: 25.07.1997
(51) Int. Cl.: B61D 27/00

(54) **Klimaanlage**

(30) Priorität: 19.08.1996 AT 1484/96
(71) Anmelder: Alex. Friedmann GmbH, 1020 Wien (AT)
(72) Erfinder: Ohnesorg, Werner, Dipl.-Ing., 1170 Wien (AT); Kirschner, Rainer, Dipl.-Ing., 80939 München (DE)
(74) Vertreter: Matschnig, Franz, Dipl.-Ing.

(57) **Zusammenfassung**

Eine Klimaanlage für ein elektrisch betriebenes Fahrzeug, insbesondere für ein Nahverkehrs-Schienenfahrzeug mit einem verhältnismäßig konstanten Fahrzyklus (t_{zykl}), bestehend aus einem erwarteten Anfahrzeitintervall (t_{anf}), Fahrzeitintervall (t_{fahr}), Bremszeitintervall (t_{brems}) und Haltezeitintervall (tₕₐₗₜ), wobei die Klimaanlage (1) eine im wesentlichen mit konstanter Leistung betriebene Kältemaschine, bestehend aus einem Kompressor und einem im Zuluftkanal angeordneten Verdampfer (6) aufweist, welchem eine Heizeinrichtung (7) zum Erwärmen der von dem Verdampfer (6) gelieferten, gekühlten Zuluft auf eine dem Fahrzeug zuzuführende Temperatur nachgeordnet ist. Bei dieser Anlage ist in dem Fahrzeug zumindest ein Fahrmotor zur Erzeugung von elektrischer Energie durch Generatorumschaltung dieses Fahrmotors während des Bremszeitintervalls (t_{brems}) vorgesehen, wobei zumindest ein Teil dieser elektrischen Energie der Heizeinrichtung (7) zur Erwärmung der Zuluft im Kühlbetrieb der Klimaanlage zuführbar ist, um bei guter Luftentfeuchtung einen energiesparenden Betrieb dieser Klimaanlage zu ermöglichen.

## Beschreibung

Die vorliegende Erfindung betrifft eine Klimaanlage für ein elektrisch betriebenes Fahrzeug, insbesondere für ein Nahverkehrs-Schienenfahrzeug mit einem verhältnismäßig konstanten Fahrzyklus, bestehend aus einem erwarteten Anfahrzeitintervall, Fahrzeitintervall, Bremszeitintervall und Haltezeitintervall, wobei die Klimaanlage eine im wesentlichen mit konstanter Leistung betriebene Kältemaschine, bestehend aus einem Kompressor und einem in einem Zuluftkanal angeordneten Verdampfer aufweist, welchem in diesem Zuluftkanal eine Heizeinrichtung zum Erwärmen der von dem Verdampfer gelieferten gekühlten Zuluft auf eine dem Fahrzeuginneren zuzuführende Temperatur nachgeordnet ist.

Zur Anpassung der Kühlleistung einer Klimaanlage an den jeweiligen Bedarf, der im wesentlichen durch die herrschende Außentemperatur, die Sonneneinstrahlung, Personenbesetzung des Fahrzeuges und die Temperatur im Fahrzeuginneren bestimmt ist, stehen für den Kühlbetrieb grundsätzlich zwei unterschiedliche Möglichkeiten zur Verfügung.

Die erste Möglichkeit besteht darin, die Kälteleistung der Kältemaschine durch schaltungstechnische Maßnahmen, z.B. durch Bypass-Schaltungen, Zylinderabschaltungen etc., durch zyklische Abschaltung bzw. Taktung des Kompressors oder durch Drehzahlveränderung des Kompressors (in Stufen oder kontinuierlich) zu reduzieren.

Ein Vorteil dieser Anlagenart liegt in einem geringen Energieverbrauch, da nur so viel Kälteleistung produziert werden muß wie zur Kühlung des Fahrzeuginneren erforderlich ist. Nachteilig wirkt sich jedoch aus, daß systembedingt kein planmäßiger Entfeuchtungsbetrieb realisiert werden kann, sodaß es bei gemäßigten Außentemperaturen (geringe Kühlleistung) und hohen Luftfeuchtigkeiten im Fahrzeuginneren zu einem schwülen Klima kommt, welches für die Fahrgäste unbequem ist und unter anderem ein Beschlagen der Scheiben zur Folge haben kann. Wenn der Kompressor nicht ständig im Betrieb ist oder mit unterschiedlichen Drehzahlen betrieben wird, verringert sich dadurch die Lebensdauer dieses Anlagentyps. Anlagen mit Bypass-Schaltungen oder Zylinderabschaltungen sind durch die Vielzahl an Komponenten aufwendig herzustellen und störanfällig.

Die zweite Möglichkeit zum Betreiben einer Klimaanlage besteht darin, daß die Kältemaschine im Dauerbetrieb mit einer im wesentlichen konstanten Leistung betrieben wird und die Anpassung an die im Fahrzeuginneren benötigte Kühlleistung durch Nachbeheizen der gekühlten Luft realisiert wird.

Diese Art einer Anlage weist den Vorteil auf, daß systembedingt eine gute Entfeuchtung der Zuluft erfolgt, da die Kältemaschine die Luft ständig unter den Taupunkt kühlt. Weiters besitzen Anlagen dieses Typs den Vorteil, daß sie mechanisch einfach aufgebaut und einfach zu regeln sind, sodaß diese Anlagen kostengünstig und wenig störanfällig sind. Als ein Nachteil dieser Anlagentype fällt jedoch ins Gewicht, daß der Energieaufwand für die Klimatisierung bei abnehmendem Kälteleistungsbedarf ansteigt, da die Kälteanlage einen annähernd konstanten Energieverbrauch aufweist und im Ausmaß der überschüssigen Kälteleistung zusätzlich Heizenergie verbraucht wird.

Die DE- 44 16 107 A offenbart ein Verfahren zum Klimatisieren des Fahrgastraumes eines elektrisch angetriebenen Schienennahverkehrsfahrzeuges. Dabei erfolgt während des Bremsbetriebes eine generatorische Rückspeisung der Bremsenergie in die Klimaanlage, wobei eine Heizeinrichtung oder eine Kühleinrichtung, allenfalls auch beide Aggregate, je nach Bedarf, angesteuert und mit dieser Energie versorgt werden können.

Eine reine Heizvorrichtung für elektrisch betriebene Nahverkehrsfahrzeuge, deren durchflutbarer Wärmespeicher durch Heizstäbe erwärmbar ist, welche beim Bremsbetrieb von einem als Generator schaltbaren Fahrmotor mit Energie versorgt werden, zeigt die DE- 38 39 271 A.

In der DE- 28 35 137 ist eine Heiz- und Lüftungseinrichtung für elektrische Nahverkehrsfahrzeuge beschrieben, bei der die Verlustwärme elektrischer Geräte über den verlustreichen Umweg eines Wärmetauschers für die Erwärmung des Wageninneren genutzt werden soll.

Es ist eine Aufgabe der Erfindung, eine Klimaanlage der eingangs genannten Art so zu verbessern, daß der Energieverbrauch gesenkt werden kann, ohne daß die Anlage aufwendig herzustellen und im Betrieb störanfällig ist.

Diese Aufgabe wird erfindungsgemäß dadurch gelöst, daß dem Fahrzeug zumindest ein Fahrmotor zur Erzeugung von elektrischer Energie durch Generatorumschaltung dieses Fahrmotors während des Bremszeitintervalls vorgesehen ist, und daß zumindest ein Teil dieser elektrischen Energie der Heizeinrichtung zur Erwärmung der Zuluft im Kühlbetrieb der Klimaanlage zuführbar ist. Dadurch kann bei äußerst geringem baulichen Aufwand durch Ausnützen der Bremsenergie des Fahrzeuges zur Speisung der Klimaanlage diese energiesparend betrieben werden. Die Klimaanlage kann somit ohne wirtschaftlich relevantem Energiemehrverbrauch betrieben werden und ermöglicht im Fahrzeuginnenraum dennoch ein komfortables Klima ohne Schwülezustände. Durch den einfachen Aufbau ist die erfindungsgemäße Anlage gegenüber bekannten Anlagen grundsätzlich einfach und kostengünstig herzustellen und überdies durch ihren kontinuierlichen Betrieb wenig störanfällig.

Für eine genaue Steuerung der Energiezuführung aus dem Fahrmotor in die Heizeinrichtung ist vorzugsweise in dem Zuluftkanal nach der Heizeinrichtung ein Temperaturfühler angeordnet. Weiters ist in dem Zuluftkanal vorzugsweise zusätzlich ein Ventilator vorgesehen, um eine kontinuierliche, vorgebbare Luftzuführung in das Fahrzeuginnere sicherzustellen.

Besonders vorteilhaft hat sich erwiesen, wenn die Heizungsvorrichtung eine durchströmbare Wärmespeicherkammer aufweist, da die Heizvorrichtung trotz einer diskontinuierlichen Energiezuführung eine im wesentlichen zeitlich konstante Wärmemenge an die Zuluft abgibt, sodaß im Betrieb Temperaturschwankungen vermieden werden können.

Bei einer bevorzugten Ausführungsform der Wärmespeicherkammer sind darin eine Anzahl elektrischer Heizstäbe enthalten. Diese, als Wärmespeicherelemente dienenden elektrischen Heizstäbe weisen je einen zentralen Heizwiderstand auf, der im wesentlichen vollständig von einem zylindrischen Wärmespeichermantel umgeben ist, wobei die durchschnittliche mittlere Strömungsgeschwindigkeit der Zuluft innerhalb der Wärmespeicherkammer konstant gehalten ist. Für eine gute Wärmespeicherwirkung hat es sich als günstig erwiesen, wenn der Durchmesser jedes Heizstabes zwischen 1,8 und 2,5 cm, vorzugsweise 2,2 cm, beträgt. Weiters hat es sich als vorteilhaft erwiesen, wenn jeder Heizstab zumindest im Durchströmungsbereich der Wärmespeicherkammer einen den Wärmespeichermantel umschließenden Stahlmantel aufweist.

Eine gute Funktion der Klimaanlage besteht insbesondere dann, wenn das Heizzeitintervall an das Bremszeitintervall angepaßt ist und dieses maximal 50% der Fahrzykluszeit beträgt. Sollte die zum Erwärmen der Zuluft erforderliche Energie größer als die durch die Generatorumschaltung in dem Bremszeitintervall erzeugbare Energie sein, ist vorgesehen, daß die Heizeinrichtung von der allgemeinen Stromversorgung des Schienenfahrzeuges, z.B. einem Fahrdraht, mit Strom versorgbar ist.

In allgemeiner Weise ist für den Betrieb von Klimaanlagen vorteilhaft, wenn der Zuluftkanal zumindest eine mit dem Außenraum verbindbare Frischluftöffnung und zusätzlich zumindest eine verschließbare, mit dem Innenraum des Fahrzeuges verbundene Umluftöffnung zur Aufnahme von Umluft aus dem Fahrzeuginneren in den Zuluftkanal aufweist.

Zusätzlich zu dem weiter oben erwähnten, hinter der Heizeinrichtung angeordneten Temperaturfühler können zur Verbesserung der Steuerung einer Klimaanlage weitere Fühler vorgesehen werden, beispielsweise ein Temperaturfühler zur Bestimmung der Temperatur der angesaugten Frischluft oder der Außenluft und/oder ein in Zuführrichtung der Zuluft nach dem Verdampfer angeordneter Temperaturfühler, der überdies ermöglicht, ein Vereisen des Verdampfers bei tiefen Außentemperaturen zu vermeiden.

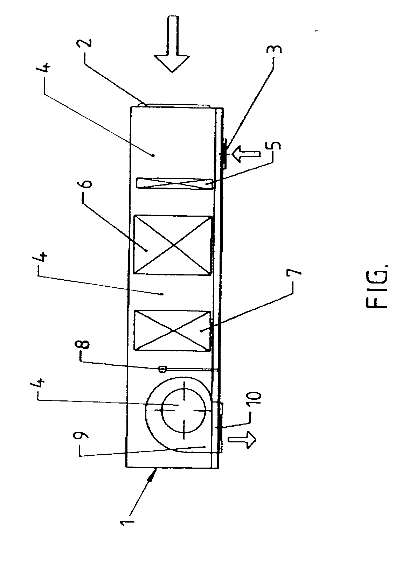

Weitere Merkmale und Vorteile der Erfindung gehen aus der folgenden Beschreibung einer beispielsweisen Ausführungsform der Erfindung hervor, welche in der beiliegenden Figur schematisch dargestellt ist.

Die Klimaanlage 1 weist einen mit dem Außenraum des Fahrzeuges verbundenen Frischlufteinlaß 2 und einen mit dem Innenraum des Fahrzeuges verbundenen Umlufteinlaß 3 auf Der Frisch- und der Umlufteinlaß 2, 3 führen in einen Zuluftkanal 4 der Klimaanlage 1, in welchem in Strömungsrichtung nacheinander ein Filter 5 zum Reinigen der angesaugten Luft, ein Verdampfer 6 für eine Kältemaschine, deren Kompressor der Einfachheit halber nicht dargestellt ist, eine Heizvorrichtung 7, ein Temperaturfühler 8 und ein Ventilator 9 angeordnet sind. Der Ventilator 9 ist druckseitig mit einem Zuluftauslaß 10 verbunden, durch welchen die angesaugte, durch den Verdampfer 6 gekühlte und durch die Heizeinrichtung 7 auf eine bestimmte Temperatur erwärmte Zuluft in das Fahrzeuginnere eingeblasen wird.

Die nur schematisch dargestellte Heizeinrichtung ist bei dem gezeigten Ausführungsbeispiel als eine Wärmespeicherheizung mit einer Wärmespeicherkammer ausgebildet, die eine Mehrzahl von Heizstäben aufweist, welche zugleich als Wärmespeicherelemente dienen und für diesen Zweck besonders dimensioniert sind. Diese besondere Konzeption der Heizeinrichtung hat sich in der Praxis als äußerst vorteilhaft erwiesen und ist unter anderem in dem österreichischen Gebrauchsmuster AT 383 U1 ausführlich beschrieben, sodaß an dieser Stelle nicht näher darauf eingegangen wird. Die Offenbarung der genannten Gebrauchsmusterschrift ist demnach ausdrücklich auch als ein Teil dieser Offenbarung anzusehen.

Elektrisch betriebene Nahverkehrsschienenfahrzeuge, z.B. Straßenbahnen oder U-Bahnen, für welche die Erfindung vorwiegend konzipiert ist, weisen im Betrieb einen verhältnismäßig konstanten Fahrzyklus auf, der aus der wiederholten Abfolge eines Anfahrzeitintervalles t_{anf}, eines Fahrzeitintervalles t_{fahr}, eines Bremszeitintervalles t_{brems}, und eines Haltezeitintervalles tₕₐₗₜ besteht. Bei der Konzipierung der Klimaanlage wird dieser Zyklus ermittelt und das Heizzeitintervall t_{heiz} der Heizeinrichtung 7 im wesentlichen an das zu erwartende Bremszeitintervall t_{brems} angepaßt. Auf Grundlage dieser Ermittlung wird nun die Heizeinrichtung der Klimaanlage dimensioniert (Anzahl der Heizstäbe, Länge der Heizstäbe u.s.w.). Die Steuerung der Klimaanlage erfolgt demnach Zyklusweise. Durch die Wirkung der Speicherheizung 7 wird dieser Heizzyklus jedoch in eine kontinuierliche Erwärmung der vom Verdampfer 6 gelieferten Kühlluft umgewandelt.

Die für die Zwecke der vorliegenden Erfindung nötige Realisierung einer Generatorumschaltung des Fahrmotors eines elektrisch betriebenen Schienenfahrzeuges ist dem Fachmann auf dem Gebiet von Schienenfahrzeugen bekannt und wird daher an dieser Stelle nicht näher erläutert.

Abschließend ist noch zu erwähnen, daß die vorliegende Erfindung nicht auf das dargestellte und beschriebene Ausführungsbeispiel eingeschränkt ist, sondern alle denkbaren Ausführungsformen umfaßt, welche von den Merkmalen der nachfolgenden Schutzansprüche Gebrauch machen.

## Patentansprüche

1. Klimaanlage für ein elektrisch betriebenes Fahrzeug, insbesondere für ein Nahverkehrs-Schienenfahrzeug mit einem verhältnismäßig konstanten Fahrzyklus (t_{zykl}), bestehend aus einem erwarteten Anfahrzeitintervall (t_{anf}), Fahrzeitintervall (t_{fahr}), Bremszeitintervall (t_{brems}) und Haltezeitintervall (tₕₐₗₜ), wobei die Klimaanlage (1) eine im wesentlichen mit konstanter Leistung betriebene Kältemaschine, bestehend aus einem Kompressor und einem im Zuluftkanal angeordneten Verdampfer (6) aufweist, welchem eine Heizeinrichtung (7) zum Erwärmen der von dem Verdampfer (6) gelieferten, gekühlten Zuluft auf eine dem Fahrzeug zuzuführende Temperatur nachgeordnet ist, **dadurch gekennzeichnet, daß** in an sich bekannter Weise in dem Fahrzeug zumindest ein Fahrmotor zur Erzeugung von elektrischer Energie durch Generatorumschaltung dieses Fahrmotors während des Bremszeitintervalls (t_{brems}) vorgesehen ist **und daß** zumindest ein Teil dieser elektrischen Energie der Heizeinrichtung (7) zur Erwärmung der Zuluft im Kühlbetrieb der Klimaanlage zuführbar ist.

2. Klimaanlage nach Anspruch 1, **dadurch gekennzeichnet, daß** in dem Zuluftkanal (4) in Strömungsrichtung nach der Heizeinrichtung (7) ein Temperaturfühler (8) zur Steuerung der Zuluft-Erwärmung durch die Heizeinrichtung (7) angeordnet ist.

3. Klimaanlage nach Anspruch 1 oder 2, **dadurch gekennzeichnet, daß** in dem Zuluftkanal (4) zusätzlich ein Ventilator (9) vorgesehen ist.

4. Klimaanlage nach einem der Ansprüche 1 bis 3, **dadurch gekennzeichnet, daß** die Heizungsvorrichtung (7) eine durchströmbare Wärmespeicherkammer aufweist.

5. Klimaanlage nach Anspruch 4, **dadurch gekennzeichnet, daß** die Wärmespeicherkammer eine Anzahl elektrischer Heizstäbe enthält.

6. Klimaanlage nach Anspruch 5, **dadurch gekennzeichnet, daß** die als Wärmespeicherelemente dienenden elektrischen Heizstäbe je einen zentralen Heizwiderstand aufweisen, der im wesentlichen vollständig von einem zylindrischen Wärmespeichermantel umgeben ist, wobei die durchschnittliche mittlere Strömungsgeschwindigkeit der Zuluft innerhalb der Wärmespeicherkammer konstant gehalten ist.

7. Klimaanlage nach Anspruch 6, **dadurch gekennzeichnet, daß** der Durchmesser jedes Heizstabes zwischen 1,8 und 2,5 cm, vorzugsweise 2,2 cm beträgt.

8. Klimaanlage nach einem der Ansprüche 5 bis 7, **dadurch gekennzeichnet, daß** jeder Heizstab zumindest im Durchströmungsbereich der Wärmespeicherkammer einen den Wärmespeichermantel umschließenden Stahlmantel aufweist.

9. Klimaanlage nach einem der Ansprüche 1 bis 8, **dadurch gekennzeichnet, daß** das Heizzeitintervall (t_{heiz}) an das Bremszeitintervall (t_{brems}) angepaßt und dieses maximal 50% der Fahrzykluszeit (t_{zyk1}) beträgt.

10. Klimaanlage nach einem der Ansprüche 1 bis 9, **dadurch gekennzeichnet, daß** die Heizeinrichtung von der allgemeinen Stromversorgung des Schienenfahrzeuges, z.B. einem Fahrdraht, mit Strom versorgbar ist, falls die zum Erwärmen der Zuluft erforderliche Energie größer als die durch die Generatorumschaltung in dem Bremszeitintervall (t_{brems}) erzeugbare Energie ist.

11. Klimaanlage nach einem der Ansprüche 1 bis 10, **dadurch gekennzeichnet, daß** der Zuluftkanal zumindest eine mit dem Außenraum verbindbare Frischluftöffnung und zumindest eine verschließbare, mit dem Innenraum des Fahrzeuges verbundene Umluftöffnung zur Aufnahme von Umluft aus dem Fahrzeuginneren in den Zuluftkanal aufweist.

12. Klimaanlage nach Anspruch 11, **dadurch gekennzeichnet, daß** weiters ein Temperaturfühler zur Bestimmung der Temperatur der angesaugten Frischluft oder der Außenluft vorgesehen ist.

13. Klimaanlage nach Anspruch 11, **dadurch gekennzeichnet, daß** weiters in Zuführrichtung der Zuluft nach dem Verdampfer ein Temperaturfühler angeordnet ist, um ein Vereisen des Verdampfers bei tiefen Außentemperaturen zu vermeiden.
